# EUROPÄISCHE PATENTSCHRIFT

(11) **EP 0 653 360 B1**
(45) Veröffentlichungstag und Bekanntmachung des Hinweises auf die Patenterteilung: **29.01.1997**
(21) Anmeldenummer: 94116204.2
(22) Anmeldetag: 14.10.1994
(51) Int. Cl.: B65D 75/14

(54) **Faltverpackung**
Folded package
Emballage plié

(30) Priorität: 12.11.1993 DE 4338628
(43) Veröffentlichungstag der Anmeldung: 17.05.1995
(73) Patentinhaber: MELITTA HAUSHALTSPRODUKTE GmbH & Co. Kommanditgesellschaft, D-32427 Minden (DE)
(72) Erfinder: Fricke, Konrad, D-32549 Bad Oeynhausen (DE); Huflage, Bernhard, D-32429 Minden (DE); Werner, André, D-32469 Petershagen (DE)
(74) Vertreter: Stracke, Alexander, Dipl.-Ing.

(56) Entgegenhaltungen:
- EP-A- 0 230 855
- EP-A- 0 413 990
- CH-A- 436 111
- DE-U- 9 003 401
- US-A- 1 760 106

## Beschreibung

Die vorliegende Erfindung betrifft eine Faltverpackung für vorzugsweise blattförmige, deckungsgleich übereinander gestapelte und im Grundriß etwa sektorenförmige Waren wie z.B. Filterpapiereinsätze für Kaffee- oder Teemaschinen.

Verpackungen für Waren der vorerwähnten Art, insbesondere für Filterpapiereinsätze für Kaffee- oder Teemaschinen, werden bislang vorzugsweise als Faltschachteln aus Karton ausgebildet. Es ist auch bekannt, derartige Waren in sog. Schrumpffolien-Verpackungen zu verpacken.

Verpackungen der erstgenannten Art sind vergleichsweise teuer, da sie aus Karton hergestellt sind und darüber hinaus ein größeres Volumen aufweisen als die zu verpackende Ware zwingend erfordert.

Die Verpackung von z.B. Filterpapiereinsätzen für Kaffee- oder Teemaschinen in Schrumpffolien ist mit dem Nachteil behaftet, daß die Verpackung aufgerissen werden muß und nach dem Öffnen einer derartigen Schrumpffolien-Verpackung ein sicheres Wiederverschließen nicht möglich ist, so daß in der Regel die Filterpapiereinsätze oder ähnliche Waren aus der schon geöffneten Schrumpffolien-Verpackung entnommen und in ein anderes Behältnis umgefüllt werden müssen.

Der vorliegenden Erfindung liegt die Aufgabe zugrunde, eine Faltverpackung der eingangs erwähnten Art zu schaffen, die einerseits preiswert herstellbar und andererseits im Gebrauch insofern vorteilhaft ist, als sie die Möglichkeit des einfachen Öffnens und des mehrfachen Wiederverschließens bietet.

Diese Aufgabe wird erfindungsgemäß dadurch gelöst, daß die Faltverpackung aus einem einstückigen, im wesentlichen quadratischen Zuschnitt aus Papier oder einem ähnlich formstabil faltbaren Material hergestellt ist, der von zwei einander gegenüberliegenden Ecken ausgehend nach Art eines Einschlages um den zu verpackenden Warenstapel eingefaltet ist, derart, daß an einer Einschlagseite eine durch Verbinden der entsprechenden Einschlagteile gesicherte Tasche und auf der gegenüberliegenden Seite eine Deckellasche gebildet ist, welche die Freigabeöffnung der Tasche vollständig überdeckt und mittels einer Wiederverschließeinrichtung gegenüber der Tasche festlegbar ist, wobei einzelne Faltlagen der Deckellasche zu deren Formstabilisierung miteinander verbunden sind, so daß die Deckellasche zur Entnahme einzelner Warenlagen aus der Tasche ausreichend weit aufklappbar, aus der geöffneten Stellung heraus aber auch wieder selbsttätig in ihre Schließlage zurückschwenkbar ist.

Eine derartige Faltverpackung kann aus relativ preiswertem Material, beispielsweise aus Papier, aus kunststoffbeschichtetem Papier, aber auch aus geeigneten Kunststoffolien hergestellt werden und schließt die zu verpackenden Waren praktisch anliegend, so daß die fertige Verpackung volumenmäßig keine oder praktisch keine Leer-Räume aufweist. Die Faltverpackung kann zur Entnahme einzelner blattförmiger Waren, z.B. eines Filterpapiereinsatzes, ausreichend weit geöffnet werden und nach dem Entnehmen beispielsweise eines Filterpapiereinsatzes auch problemlos wieder verschlossen werden, da aufgrund der Gestaltung der Deckellasche ein nicht kontrolliertes Zurückfalten der Deckellasche verhindert ist. Für den Verbraucher ist somit eine Faltverpackung geschaffen, die zumindest während des sukzessiven Entnehmens der verpackten Ware ihre Formstabilität und somit ihre Schutzfunktion beibehält.

Ein Ausführungsbeispiel der Erfindung ist in den beigefügten Zeichnungen dargestellt und wird im folgenden näher beschrieben. Es zeigen:
- Fig. 1: eine perspektivische Darstellung einer erfindungsgemäßen Faltverpackung in geschlossener Stellung,
- Fig. 2: eine perspektivische Darstellung der Faltverpackung nach Figur 1 in Öffnungsstellung,
- Fig. 3: einen flachliegenden Zuschnitt für die Herstellung der Faltverpackung nach den Figuren 1 und 2.

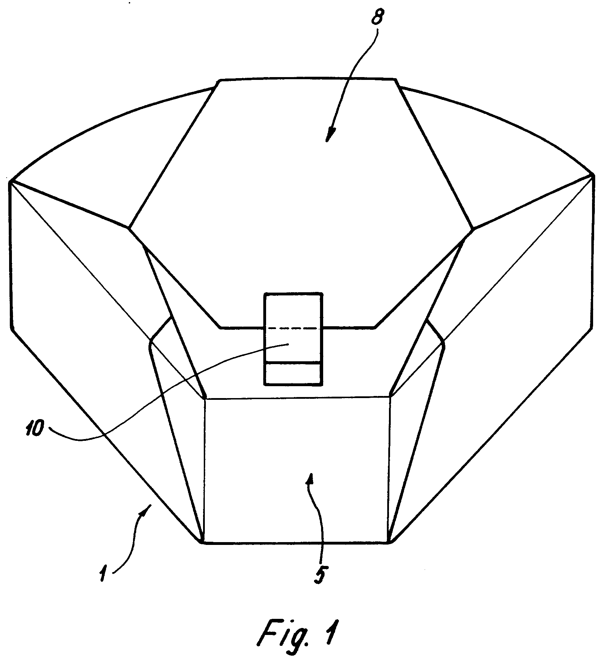

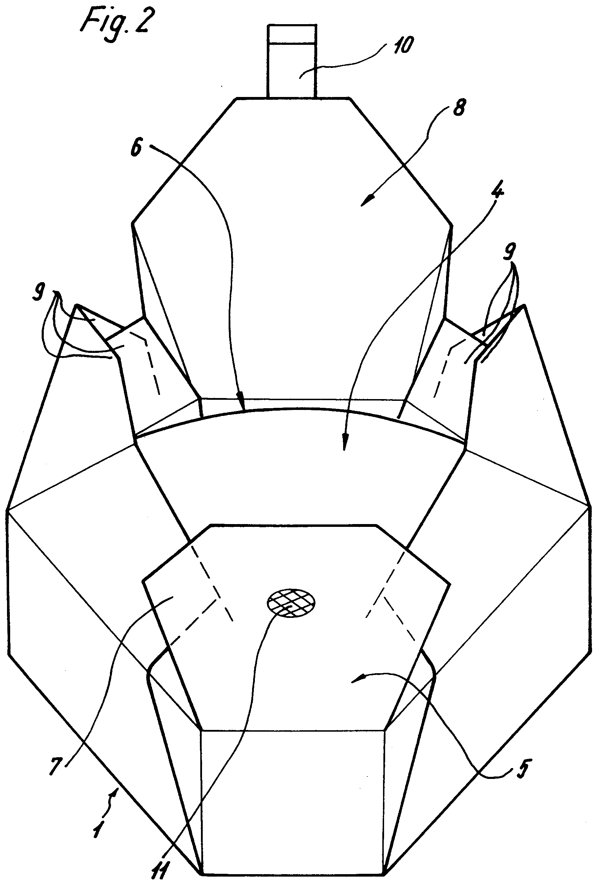

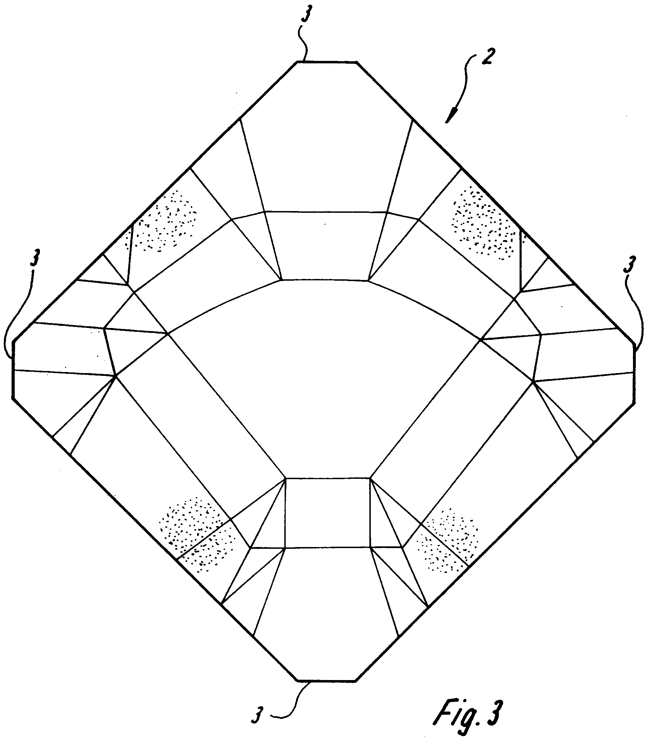

Die in den Figuren 1 und 2 gezeigte Faltverpackung 1 ist insgesamt aus einem Zuschnitt 2 gemäß Figur 3 dargestellt. Der Zuschnitt 2 weist eine praktisch quadratische Grundform auf, wobei die Ecken 3 des Zuschnittes 2 geringfügig abgeschnitten sind. Der Zuschnitt 2 besteht aus Papier, kann aber auch aus kunststoffbeschichtetem Papier oder einem ähnlich formstabilen faltbaren Kunststoff bestehen.

Im dargestellten Ausführungsbeispiel ist eine Faltverpackung zur Aufnahme von Filterpapiereinsätzen 4 für Kaffee- oder Teemaschinen bestimmt, wie Figur 2 besonders anschaulich zeigt.

Durch entsprechendes Einfalten des Zuschnittes 2 längs der in Figur 3 gezeigten Faltlinien um einen Stapel von Filterpapiereinsätzen 4 herum - was von zwei einander gegenüberliegenden Ecken 3 des Zuschnittes 2 aus geschieht - wird an der unteren Einschlaghälfte eine Tasche 5 gebildet, welche die zu verpackenden Filterpapiereinsätze 4 allseitig umschließt und lediglich eine Entnahmeöffnung 6 zur Entnahme der Filterpapiereinsätze 4 aufweist. Die Tasche 5 ist durch das Verbinden entsprechender, übereinanderliegender Einschlagteile 7 gesichert, bzw. stabilisiert. Die übereinanderliegenden Einschlagteile 7 können beispielsweise miteinander verklebt oder durch die Aktivierung eines Heißsiegelmediums miteinander verbunden sein.

Auf der der Tasche 5 gegenüberliegenden Seite ist durch entsprechendes Einfalten eine Deckellasche 8 gebildet, bei der wiederum einzelne Faltlagen 9 zur Formstabilisierung der Deckellasche miteinander verbunden sind. Auch hier kann die Verbindung durch Verkleben mittels eines Leimes, mittels eines Heißsiegelmediums oder durch andere Verbindungstechniken erfolgen.

Durch die Formstabilisierung der Deckellasche 8 durch die Verbindung der Faltlagen 9 wird gewährleistet, daß die Deckellasche 8 soweit geöffnet werden kann, daß eine Entnahme der Filterpapiereinsätze 4 möglich ist, daß aber auch andererseits die Deckellasche 8 aus der geöffneten Stellung heraus behinderungsfrei wieder in ihre Schließlage zurückgeschwenkt werden kann. Ein kontrolliertes Auseinanderklaffen der Faltlagen der Deckellasche 8 beim Öffnen bzw. beim Schließen wird durch die Formstabilisierung wirksam verhindert, so daß ein Benutzer keine besondere Aufmerksamkeit beim Verschließen der Faltverpackung aufwenden muß.

Die Deckellasche 8 ist durch eine Wiederverschlußeinrichtung 10, beispielsweise in Form eines Klebestreifens, in der Schließlage an der Tasche 5 festlegbar.

Wie Figur 2 zeigt, ist an der Tasche 5 ein Klebe- oder Haftpunkt 11 angeordnet, der außerhalb des Wirkungsbereiches der Wiederverschlußeinrichtung 10 liegt und beim Herstellen der Faltverpackung eine Klebeverbindung mit der Deckellasche 8 eingeht. Beim erstmaligen Öffnen der Faltverpackung 1 muß die Deckellasche 8 entgegen der Haftkraft des Klebepunktes 11 geöffnet werden, so daß ein Verbraucher sofort erkennen kann, daß er die Faltverpackung erstmals öffnet. Der Klebepunkt 11 bildet somit einen sog. Originalitätsverschluß.

Die Faltverpackung 1 ist aufgrund ihrer Konzeption preiswert herstellbar und bietet einen wirksamen Schutz für die verpackte Ware bis zu deren vollständiger Entnahme.

## Patentansprüche

1. Faltverpackung für vorzugsweise blattförmige, deckungsgleich übereinander gestapelte und im Grundriß etwa sektorenförmige Waren wie z.B. Filterpapiereinsätze für Kaffee- oder Teemaschinen, **dadurch gekennzeichnet, daß** die Faltverpackung (1) aus einem einstückigen, im wesentlichen quadratischen Zuschnitt (2) aus Papier oder einem ähnlich formstabil faltbaren Material hergestellt ist, der von zwei gegenüberliegenden Ecken (3) ausgehend nach Art eines Einschlages um den zu verpackenden Warenstapel eingefaltet ist, derart, daß an einer Einschlagseite eine durch Verbinden der entsprechenden Einschlagteile (7) gesicherte Tasche (5) und auf der gegenüberliegenden Seite eine Deckellasche (8) gebildet ist, welche die Freigabeöffnung (6) der Tasche (5) vollständig überdeckt und mittels einer Wiederverschlußeinrichtung (10) gegenüber der Tasche (5) festlegbar ist, wobei einzelne Faltlagen (9) der Deckellasche (8) zu deren Formstabilisierung miteinander verbunden sind, so daß die Deckellasche (8) zur Entnahme einzelner Warenlagen (4) aus der Tasche (5) ausreichend weit aufklappbar, aus der geöffneten Stellung heraus aber auch wieder selbsttätig in ihre Schließlage zurückschwenkbar ist.

2. Faltverpackung nach Anspruch 1, **dadurch gekennzeichnet, daß** der Zuschnitt (2) aus teilweise oder vollständig mit Heißsiegelmedium beschichtetem Papier oder aus einer Kunststoffolie besteht.

3. Faltverpackung nach Anspruch 1 oder 2, **dadurch gekennzeichnet, daß** die Einschlagteile (7) und die Faltlagen (9) miteinander verklebt sind.

4. Faltverpackung nach Anspruch 3, **dadurch gekennzeichnet, daß** zur Verklebung Leim, Hotmeltkleber oder andere Haftmittel auf die Einschlagteile (7) bzw. die Faltlage (9) aufgebracht sind.

5. Faltverpackung nach einem oder mehreren der vorhergehenden Ansprüche, **dadurch gekennzeichnet, daß** die Deckellasche (8) außerhalb des Wirkungsbereiches der Wiederverschlußeinrichtug (10) über einen bis zur erstmaligen Öffnung wirksamen Klebepunkt (11) mit der Tasche (5) verbunden ist.

6. Faltverpackung nach einem oder mehreren der vorhergehenden Ansprüche, **dadurch gekennzeichnet, daß** die Wiederverschlußeinrichtung (10) aus einem an der Deckellasche (8) befestigten Klebestreifen (10) besteht.

## Claims

1. A folding package for articles which are preferably in sheet form and stacked in mutually aligned superposed relationship and which are approximately sector-shaped in plan view, such as for example filter paper inserts for coffee-making or tea-making machines, characterised in that the folding package (1) is made from a one-piece, substantially square blank (2) of paper or a material which can be similarly folded in such a manner as to be stable in respect of shape, which is folded in starting from two oppositely disposed corners (3) in the manner of a hem around the stack of articles to be packaged, in such a way that there is formed at one hem side a packet (5) which is secured by joining the corresponding hem portions (7) and formed on the opposite side is a cover flap (8) which completely covers over the access opening (6) of the pocket and which can be fixed by way of a re-closure means (10) relative to the packet (5), wherein individual fold layers (9) of the cover flap (8) are joined together for stabilising the shape thereof so that the cover flap (8) can be pivoted open sufficiently far for removing individual layers of articles (4) from the packet but is automatically pivotable back into its closed position again from the opened position.

2. A folding package according to claim 1 characterised in that the blank (2) comprises a plastics foil or paper which is partially or completely coated with heat-sealing medium.

3. A folding package according to claim 1 or claim 2 characterised in that the hem portions (7) and the fold layers (9) are glued together.

4. A folding package according to claim 3 characterised in that glue, hot-melt adhesive or other adhesive agents are applied to the hem portions (7) or the fold layer (9) for the glueing operation.

5. A folding package according to one or more of the preceding claims characterised in that the cover flap (8) is connected to the pocket (5) outside the operative region of the re-closure means (10) by way of an adhesive point (11) which is effective until the package is opened for the first time.

6. A folding package according to one or more of the preceding claims characterised in that the re-closure means (10) comprises an adhesive strip (10) fixed to the cover flap (8).

## Revendications

1. Emballage plié destiné à recevoir de préférence des produits en forme de feuilles de mêmes dimensions empilées les unes sur les autres et ayant en plan une forme sensiblement sectorielle, comme par exemple des filtres de garniture en papier pour machines à café ou à thé, présentant les caractéristiques suivantes :
- l'emballage plié (1) est fabriqué à partir d'une découpe monobloc (2) sensiblement carrée, en papier ou autre matériau analogue pliable avec stabilité de forme,
- la découpe (2) est pliée, en partant de deux angles opposés (3), à la manière d'un emballage autour de la pile à emballer de manière à créer d'un côté une poche (5) confortée par liaison entre elles des parties correspondantes (7) de l'emballage, du côté opposé une patte de couverture (8) recouvrant entièrement l'ouverture de sortie (6) de la poche, cette patte pouvant être fixée sur la poche (5) par un dispositif de fermeture réutilisable (10),
- les diverses couches pliées (9) de la patte de couverture sont reliées entre elles pour stabiliser leurs formes, de sorte que la patte de couverture (8) peut être relevée suffisamment pour permettre d'extraire de la poche (5) chaque couche de produit (4), puis rabattre à partir de cette position d'ouverture pour retrouver automatiquement sa position de fermeture.

2. Emballage plié selon la revendication 1,
caractérisé en ce que
la découpe (2) est faite d'un papier totalement ou partiellement recouvert d'un agent de scellement à chaud, ou d'une pellicule de matière plastique.

3. Emballage plié selon la revendication 1 ou 2,
caractérisé en ce que
les parties de l'emballage (7) et les couches pliées (9) de celui-ci sont collées entre elles.

4. Emballage plié selon la revendication 3,
caractérisé en ce que
pour assurer le collage, on dépose de la colle, de l'adhésif « hot melt » ou un autre agent adhésif sur les parties (7) de l'emballage et sur les couches pliées (9).

5. Emballage plié selon une ou plusieurs des revendications précédentes,
caractérisé en ce que
la patte de couverture (8) est reliée à la poche (5) en dehors de la zone d'action du dispositif de fermeture réutilisable (10), par un point de collage (11) actif jusqu'à la première ouverture de l'emballage.

6. Emballage plié selon une ou plusieurs des revendications précédentes,
caractérisé en ce que
le dispositif de fermeture réutilisable (10) est constitué par une bande adhésive fixée à la patte de couverture (8).
